# FASCICULE DE BREVET EUROPEEN

(11) **EP 2 592 983 B1**
(45) Date de publication et mention de la délivrance du brevet: **03.08.2022**
(21) Numéro de dépôt: 11806358.5
(22) Date de dépôt: 08.07.2011
(51) Int. Cl.: A47J 37/06, A47J 37/04, A47J 36/16, A47J 37/10, A47J 43/07

(54) **APPAREIL DE CUISSON EN DEUX ZONES**
KOCHVORRICHTUNG MIT ZWEI BEREICHEN
COOKING APPLIANCE HAVING TWO AREAS

(30) Priorité: 13.07.2010 FR 1055737
(43) Date de publication de la demande: 22.05.2013
(73) Titulaire: SEB S.A., 69130 Ecully (FR)
(72) Inventeur: SOBOLE, Céline, F-21490 Clenay (FR); BIZARD, Jean-Claude, F-21121 Fontaine-les-Dijon (FR)
(74) Mandataire: SEB Développement
(86) Numéro de dépôt international: PCT/FR2011/051637
(87) Numéro de publication internationale: WO 2012/007681

(56) Documents cités:
- EP-A1- 2 364 625
- WO-A2-2006/000699
- DE-A1- 10 249 565
- DE-U1- 20 200 255
- FR-A7- 2 191 709
- JP-A- 2004 097 571

## Description

La présente invention concerne le domaine technique des appareils de cuisson utilisant un flux chauffant orienté de façon à frapper sensiblement au moins une partie des aliments.

Le document WO2006/000699 divulgue un appareil du type précité. Toutefois cet appareil propose une seule zone de cuisson. Cet appareil permet de faire des frites, mais n'est pas adapté pour cuire correctement les aliments fragiles tels que par exemple les calamars frits surgelés, et n'est pas adapté du tout pour cuire les steaks hachés, ni les grosses pièces de viande ou de poisson.

Des appareils de cuisson en deux zones de cuisson sont par exemple connus des documents DE20200255 U1, DE10249565 A1, FR2191709 A7, JP2004097571 A, et EP2364625 A1.

Un but de la présente invention est de permettre d'augmenter le nombre de recettes réalisables dans un appareil du type précité.

Un autre but de la présente invention est de permettre la cuisson d'un plat complet comportant deux types d'aliments différents nécessitant des cuissons différenciées.

Ces buts sont atteints avec un appareil de cuisson, notamment une friteuse à cuisson sèche, comprenant une enceinte de cuisson, un moyen de chauffe conçu pour générer un flux chauffant dans l'enceinte de cuisson, un moyen de réception prévu pour recevoir les aliments dans l'enceinte de cuisson, un moyen de remuage disposé au sein du moyen de réception, le moyen de réception présentant une ouverture supérieure, le flux chauffant entrant dans le moyen de réception par l'ouverture supérieure, du fait qu'un support de cuisson distinct du moyen de remuage est agencé dans l'enceinte de cuisson et forme une surface de cuisson directement exposée au flux chauffant, ledit support de cuisson délimitant avec le moyen de réception une première zone de cuisson protégée partiellement du flux chauffant et une deuxième zone de cuisson davantage exposée au flux chauffant que la première zone de cuisson. Cette disposition permet d'obtenir deux ambiances de cuisson dans un appareil de cuisson à flux chauffant comportant un moyen de remuage. Des plats comprenant des aliments demandant des temps de cuisson et/ou des températures de cuisson différents peuvent ainsi être réalisés plus facilement, tout en permettant le remuage de certains des aliments.

Selon une forme de réalisation avantageuse, l'enceinte de cuisson est définie par un boîtier logeant le moyen de réception, le moyen de remuage et le support de cuisson. En alternative, l'enceinte de cuisson pourrait notamment être définie partiellement par le moyen de réception.

Selon une forme de réalisation avantageuse, le support de cuisson est amovible par rapport au moyen de réception. Cette disposition permet de débuter la cuisson d'un premier aliment dans l'une des zones de cuisson et de mettre en place le support de cuisson pour effectuer la cuisson du deuxième aliment dans l'autre zone de cuisson. Cette disposition permet également de faciliter la mise en place et le retrait des aliments dans le moyen de réception tout en autorisant une plus grande surface de cuisson sur le support de cuisson. Cette disposition permet aussi de faciliter le nettoyage du support de cuisson.

Avantageusement alors, le moyen de chauffe est conçu pour générer un flux chauffant atteignant le moyen de réception en l'absence du support de cuisson dans l'enceinte de cuisson. Cette disposition permet de combiner les effets du flux chauffant et du moyen de remuage dans une première phase.

Avantageusement encore, le moyen de chauffe est conçu pour générer un flux chauffant atteignant le moyen de réception en présence du support de cuisson dans l'enceinte de cuisson. Cette disposition permet de combiner les effets du flux chauffant et du moyen de remuage lors de l'utilisation du support de cuisson.

Selon une forme de réalisation avantageuse, le support de cuisson repose sur le moyen de remuage. En alternative, le support de cuisson pourrait notamment reposer sur le moyen de réception.

Selon une forme de réalisation avantageuse, le support de cuisson est entraîné en rotation. Cette disposition permet notamment de réaliser des cuissons d'aliments à l'unilatérale, ne nécessitant pas de remuage, telles que les steaks.

Selon une forme de réalisation avantageuse, le support de cuisson présente au moins une portion concave. Cette disposition permet notamment d'éviter l'écoulement de jus de cuisson dans le moyen de réception.

Selon une forme de réalisation avantageuse, le moyen de réception forme une cuve. Cette disposition permet notamment de cuire des aliments en présence de liquide.

Selon une forme de réalisation avantageuse, le moyen de réception et le moyen de remuage sont conçus pour être animés d'un mouvement relatif de rotation. Cette disposition permet d'améliorer le brassage des aliments.

Selon une forme de réalisation avantageuse, le moyen de remuage est entraîné en rotation. Cette disposition permet de minimiser les efforts d'entraînement.

Selon une forme de réalisation, le flux chauffant comprend un flux d'air chaud. En alternative, le flux chauffant pourrait notamment comprendre un rayonnement infrarouge.

Selon un premier mode de réalisation, la surface de cuisson est interposée entre le flux chauffant et le moyen de réception. Ainsi la première zone de cuisson peut être ménagée entre le moyen de réception et le support de cuisson, la deuxième zone de cuisson étant ménagée au dessus de la surface de cuisson du support de cuisson.

Selon un deuxième mode de réalisation, le moyen de chauffe comporte un ventilateur générant un flux aéraulique et un élément chauffant agencé dans le flux aéraulique généré par le ventilateur, le moyen de chauffe générant un flux d'air chaud toroïdal propulsé par le ventilateur, et le support de cuisson est agencé au moins partiellement à l'intérieur du flux d'air chaud toroïdal. Ainsi la première zone de cuisson protégée au moins partiellement du flux chauffant est agencée au dessus du support de cuisson, et la deuxième zone de cuisson davantage exposée au flux chauffant est agencée en dessous du support de cuisson.

Avantageusement alors, le support de cuisson présente au moins une ouverture centrale prévue pour le passage du flux d'air chaud toroïdal. En alternative, l'ouverture centrale pourrait notamment être ménagée dans un support central du support de cuisson.

Avantageusement encore, le support de cuisson ménage un passage annulaire avec le moyen de réception. En alternative, plusieurs passages latéraux pourraient notamment être ménagés entre le support de cuisson et le moyen de réception, ou encore en périphérie du support de cuisson.

L'invention sera mieux comprise à l'étude de deux exemples de réalisation, pris à titre nullement limitatif, illustrés dans les figures annexées, dans lesquelles :
- la figure 1 est une vue en élévation et en coupe d'un premier exemple de réalisation de l'invention,
- la figure 2 est une vue schématique en élévation et en coupe d'un deuxième exemple de réalisation de l'invention.

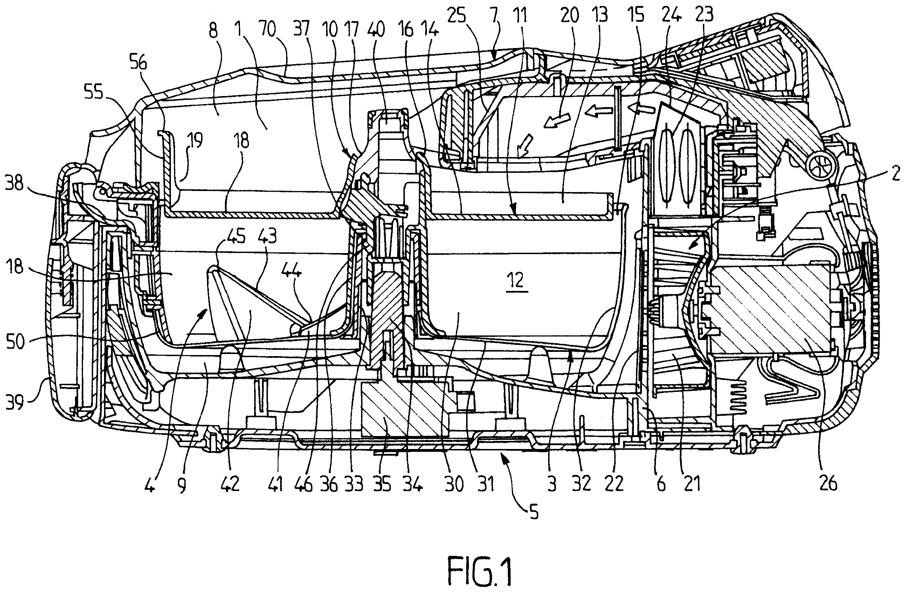

L'appareil de cuisson représenté à la figure 1 comprend une enceinte de cuisson 1, un moyen de chauffe 2 conçu pour générer un flux chauffant dans l'enceinte de cuisson 1, un moyen de réception 3 prévu pour recevoir les aliments dans l'enceinte de cuisson 1, un moyen de remuage 4 disposé au sein du moyen de réception 3.

Pour permettre de réaliser une plus grande variété de cuissons, l'appareil de cuisson selon l'invention comprend aussi un support de cuisson 10 agencé dans l'enceinte de cuisson 1. Le support de cuisson 10 est distinct du moyen de remuage 4.

Plus particulièrement, l'enceinte de cuisson 1 est définie par un boîtier 5 logeant le moyen de réception 3, le moyen de remuage 4 et le support de cuisson 10. Le boîtier 5 comprend un couvercle 7 monté sur une embase 6. L'embase 6 et le couvercle 7 délimitent l'enceinte de cuisson 1. Le couvercle 7 comporte une partie transparente ou translucide 70 agencée au dessus du moyen de réception 3. Le moyen de réception 3 présente une ouverture supérieure 8. Le boîtier 5 définit un logement 9 dans lequel est agencé le moyen de réception 3. Le moyen de réception 3 est immobile par rapport au boîtier 5. Le moyen de réception 3 est avantageusement monté amovible par rapport au boîtier 5.

Le moyen de chauffe 2 est logé dans le boîtier 5. Le moyen de chauffe 2 comporte un ventilateur 21 générant un flux aéraulique, et un élément chauffant 23 agencé dans le flux aéraulique généré par le ventilateur 21. Le ventilateur 21 est entraîné par un moteur de ventilation 26. Le moyen de chauffe 2 génère un flux chauffant 20 entrant dans le moyen de réception 3 par l'ouverture supérieure 8. Le flux chauffant 20 est orienté de façon à frapper sensiblement directement au moins une partie des aliments.

Le ventilateur 21 est prévu pour aspirer l'air présent dans le logement 9 par une admission d'air 22 et pour propulser l'air sur l'élément chauffant 23 agencé dans un conduit 24 débouchant dans le logement 9. Ainsi le flux chauffant 20 comprend un flux d'air chaud. Une partie 25 du conduit 24 est ménagée dans le couvercle 7.

Le moyen de chauffe 2 est conçu pour générer un flux chauffant 20 atteignant le moyen de réception 3 en l'absence du support de cuisson 10 dans l'enceinte de cuisson 1.

Le moyen de réception 3 est formé par une cuve 30 comportant un fond 31 et une paroi latérale 32. Tel que bien visible sur la figure 1, le fond 31 est incliné vers le bas en direction de la paroi latérale 32. La cuve 30 présente une ouverture centrale 33 prévue pour le passage d'un axe d'entraînement 34 entraîné en rotation par un moteur 35. Une cheminée 36 est montée sur l'ouverture centrale 33.

Le moyen de remuage 4 forme un moyen pour enduire automatiquement les aliments d'une pellicule de matière grasse par brassage desdits aliments avec de la matière grasse. L'appareil de cuisson illustré sur la figure 1 forme ainsi une friteuse à cuisson sèche.

Le moyen de réception 3 et le moyen de remuage 4 sont conçus pour être animés d'un mouvement relatif de rotation. Le moyen de remuage 4 comporte un moyeu 40 prévu pour coiffer la cheminée 36, et un bras 41 issu du moyeu 40. Le moyen de remuage 4 est entraîné en rotation par l'axe d'entraînement 34. Le moyen de remuage 4 comprend un moyen de soulèvement des aliments 42 formé par une surface fuyante 43 inclinée par rapport à l'axe du moyeu 40. La largeur de la surface fuyante 43 diminue depuis une partie inférieure avant 44 vers une partie supérieure arrière 45. Le moyen de remuage 4 est monté sur l'axe d'entraînement 34. Le moyen de remuage 4 présente un organe d'accrochage 46 prévu pour venir en prise avec un organe de retenue 37 ménagé dans la cheminée 36.

La cuve 30 est avantageusement réalisée en matériau métallique, de préférence en matériau métallique revêtu ou en acier inoxydable. Le moyen de réception 3 comporte un support 38 fixé à la cuve 30. Le moyen de réception 3 comporte une poignée 39. La poignée 39 est par exemple montée articulée sur le support 38. Un obstacle latéral 50 est positionné dans le moyen de réception 3. Plus particulièrement, l'obstacle latéral 50 est issu du support 38. L'obstacle latéral 50 s'étend sur au moins une partie de la hauteur de la paroi latérale 32 de la cuve 30.

Le support de cuisson 10 agencé dans l'enceinte de cuisson 1 forme une surface de cuisson 11 directement exposée au flux chauffant 20. Le support de cuisson 10 délimite une première zone de cuisson 12 protégée au moins partiellement du flux chauffant 20 et une deuxième zone de cuisson 13 davantage exposée au flux chauffant 20 que la première zone de cuisson 12.

Plus particulièrement, le support de cuisson 10 est amovible par rapport au moyen de réception 3. Le support de cuisson 10 repose sur le moyen de remuage 4. Ainsi le support de cuisson 10 est entraîné en rotation. Le support de cuisson 10 présente au moins une portion concave 14 prévue pour recevoir les aliments et contenir les jus de cuisson.

Tel que visible sur la figure 1, la surface de cuisson 11 est interposée entre le flux chauffant 20 et le moyen de réception 3. La première zone de cuisson 12 protégée au moins partiellement du flux chauffant 20 correspond au moyen de réception 3, et la deuxième zone de cuisson 13 davantage exposée au flux chauffant 20 que la première zone de cuisson 12 correspond à la surface de cuisson 11.

Ainsi, tel que bien visible sur la figure 1, le moyen de remuage 4 est agencé dans la première zone de cuisson 12.

Le support de cuisson 10 ménage un passage annulaire 15 avec le moyen de réception 3. Le support de cuisson 10 comporte un organe d'appui 16 reposant sur le moyeu 40. L'organe d'appui 16 ménage une ouverture centrale 17. Le support de cuisson 10 s'étend au dessus du moyen de remuage 4. Le support de cuisson 10 présente un fond 18 annulaire entouré par une paroi latérale 19. Le support de cuisson 10 comporte un organe de préhension 55 présentant un bord supérieur recourbé 56. Une poignée amovible décrite dans le document WO 2004010832 peut par exemple être utilisée pour saisir l'organe de préhension 55.

L'appareil selon l'invention fonctionne et s'utilise de la manière suivante.

L'utilisateur peut préparer un plat complet tel qu'un steak frites en plaçant des pommes de terre fraiches taillées en bâtonnets dans le moyen de réception 3 après avoir enlevé le support de cuisson 10, par exemple au moyen d'une poignée amovible précitée. L'utilisateur fait alors fonctionner l'appareil sans le support de cuisson 10. Le moyen de chauffe 2 associé au moyen de remuage 4 permet la cuisson des frites. Lorsque la cuisson des frites est presque terminée, l'utilisateur ouvre le couvercle 7 et place dans l'enceinte de cuisson 1 le support de cuisson 10 avec un ou plusieurs steaks. L'utilisateur referme l'enceinte de cuisson 1 et remet en marche l'appareil. Les frites placées dans la première zone de cuisson 12 sous le support de cuisson 10 terminent de cuire et/ou sont maintenues au chaud lors de la cuisson du ou des steaks placés dans la deuxième zone de cuisson 13 sur le support de cuisson 10. La rotation du support de cuisson 10 entraîné par le moyeu 40 permet un passage du ou des steaks sous la sortie du conduit 24. Une cuisson rapide peut être obtenue sous l'effet de l'air chaud frappant directement l'aliment placé sur la surface de cuisson 11, et sous l'effet de l'élévation de la température de la surface de cuisson 11 frappée directement par l'air chaud à côté de l'aliment.

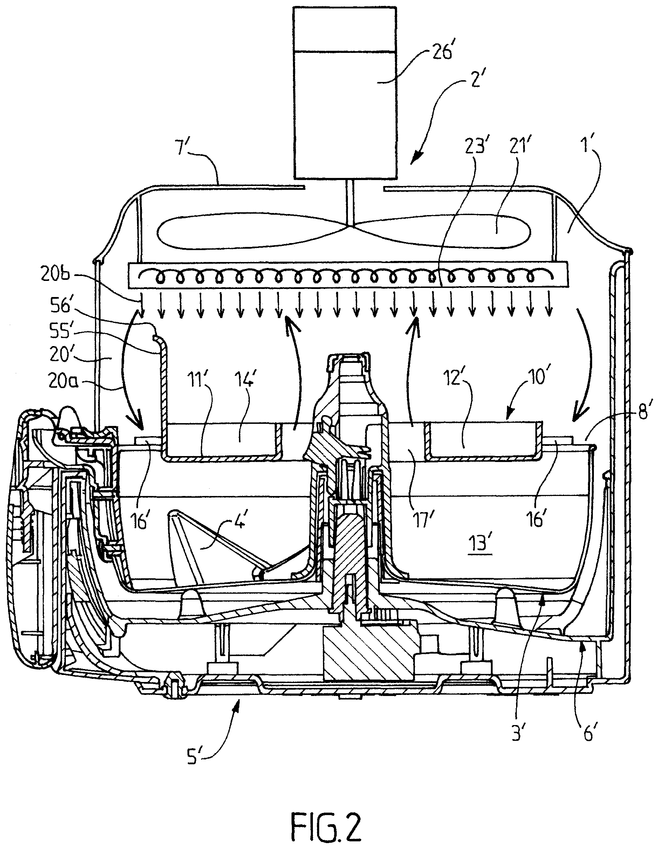

L'appareil de cuisson représenté à la figure 2 comprend une enceinte de cuisson 1', un moyen de chauffe 2' conçu pour générer un flux chauffant dans l'enceinte de cuisson 1', un moyen de réception 3' prévu pour recevoir les aliments dans l'enceinte de cuisson 1', un moyen de remuage 4' disposé au sein du moyen de réception 3'. Le moyen de réception 3' est identique au moyen de réception 3 et le moyen de remuage 4' est identique au moyen de remuage 4. Le moyen de réception 3' et le moyen de remuage 4' sont conçus pour être animés d'un mouvement relatif de rotation.

L'appareil de cuisson illustré sur la figure 2 diffère de l'appareil de cuisson illustré sur la figure 1 en ce que le moyen de chauffe 2' génère un flux d'air chaud toroïdal. Le moyen de chauffe 2' est porté par un couvercle 7' monté sur une embase 6' d'un boîtier 5' formant l'enceinte de cuisson 1'. Le moyen de chauffe 2' comporte un ventilateur 21' générant un flux aéraulique, et un élément chauffant 23' agencé dans le flux aéraulique généré par le ventilateur 21'. Le moyen de chauffe 2' génère un flux chauffant 20' entrant dans le moyen de réception 3' par l'ouverture supérieure 8' du moyen de réception 3'. Le flux chauffant 20' est orienté de façon à frapper sensiblement directement au moins une partie des aliments. Le flux chauffant 20' comprend un flux d'air chaud 20a toroïdal propulsé par le ventilateur 21', ainsi qu'un flux rayonnant 20b issu de l'élément chauffant 23'. L'élément chauffant 23' est agencé dans l'enceinte de cuisson 1'. Le ventilateur 21' est entraîné par un moteur de ventilation 26'.

Le support de cuisson 10' est distinct du moyen de remuage 4'. Le support de cuisson 10' est agencé au moins partiellement à l'intérieur du flux d'air chaud 20a toroïdal. Le support de cuisson 10' agencé dans l'enceinte de cuisson 1' forme une surface de cuisson 11' directement exposée au flux rayonnant 20b issu de l'élément chauffant 23'. L'essentiel du flux chauffant 20' provient du flux d'air chaud 20a. Ainsi la première zone de cuisson 12' protégée au moins partiellement du flux chauffant 20' correspond à la surface de cuisson 11' et la deuxième zone de cuisson 13' davantage exposée au flux chauffant 20' que la première zone de cuisson 12' correspond au moyen de réception 3'.

Ainsi tel que bien visible sur la figure 2, le moyen de remuage 4' est agencé dans la deuxième zone de cuisson 13'.

Le support de cuisson 10' présente au moins une ouverture centrale 17' prévue pour le passage du flux d'air chaud 20a toroïdal. Le support de cuisson 10' repose sur le moyen de réception 3'. A cet effet le support de cuisson 10' présente plusieurs bras 16' prenant appui sur le moyen de réception 3'. Le support de cuisson 10' présente une portion concave 14' annulaire. Si désiré le support de cuisson 10' peut présenter plusieurs portions concaves. Le support de cuisson 10' comporte un organe de préhension 55' présentant un bord supérieur recourbé 56'.

Le moyen de chauffe 2' est conçu pour générer un flux chauffant 20' atteignant la face supérieure du moyen de réception 3' en présence et en l'absence du support de cuisson 10' dans l'enceinte de cuisson 1'.

L'appareil de cuisson illustré sur la figure 2 peut notamment être utilisé pour réaliser simultanément une cuisson avec remuage dans le moyen de réception 3' et une cuisson sans remuage sur le support de cuisson 10'.

A titre de variante, le support de cuisson 10 pourrait notamment comporter une découpe ou des ouies ou un diamètre plus petit permettant partiellement le passage du flux d'air chaud par l'extérieur du support de cuisson 10 exposant directement la première zone de cuisson au flux chauffant 20

A titre de variante, la première zone de cuisson 12 de l'enceinte de cuisson 3 pourrait être délimitée de manière étanche ou quasi-étanche par le support de cuisson 10.

A titre de variante, le support de cuisson 10, 10' ne présente pas nécessairement une géométrie annulaire. Le support de cuisson 10, 10' peut notamment former un quartier ou présenter une forme en haricot.

A titre de variante, le support de cuisson 10 pourrait reposer sur le moyen de réception 3.

A titre de variante, le support de cuisson 10' pourrait reposer sur le moyen de remuage 4'.

A titre de variante, le flux rayonnant 20b issu de l'élément chauffant 23' pourrait être renvoyé par un réflecteur sur la surface de cuisson 11'.

A titre de variante, d'autres types de moyens de chauffe 2 peuvent être envisagés, notamment un moyen de chauffe par rayonnement générant un flux chauffant rayonnant entrant dans le moyen de réception 3 par l'ouverture supérieure 8.

A titre de variante, le moyen de remuage 4 ; 4' n'est pas nécessairement entraîné en rotation dans le moyen de réception 3 ; 3'. Notamment, le moyen de réception 3 ; 3' peut être monté entraîné en rotation, si désiré dans un boîtier.

A titre de variante, le moyen de réception 3, 3' n'est pas nécessairement formé par une cuve. Le moyen de réception 3, 3' présente de préférence un fond et une paroi latérale. Le moyen de réception 3, 3' peut notamment être formé par un panier ajouré.

A titre de variante, le support de cuisson 10 ; 10' n'est pas nécessairement monté amovible par rapport au moyen de réception 3, 3'.

La présente invention n'est nullement limitée à l'exemple de réalisation décrit et à ses variantes, mais englobe de nombreuses modifications dans le cadre des revendications.

## Revendications

1. Appareil de cuisson, notamment friteuse à cuisson sèche, comprenant une enceinte de cuisson (1 ; 1'), un moyen de chauffe (2 ; 2'), conçu pour générer un flux chauffant (20 ; 20') dans l'enceinte de cuisson (1 ; 1'), un moyen de réception (3 ; 3') prévu pour recevoir les aliments dans l'enceinte de cuisson (1 ; 1'), un moyen de remuage (4 ; 4') disposé au sein du moyen de réception (3 ; 3'), le moyen de réception (3 ; 3') présentant une ouverture supérieure (8 ; 8'), le flux chauffant (20 ; 20') entrant dans le moyen de réception (3 ; 3') par l'ouverture supérieure (8 ; 8'), **caractérisé en ce qu'**un support de cuisson (10 ; 10') distinct du moyen de remuage (4 ; 4') est agencé dans l'enceinte de cuisson (1 ; 1') et forme une surface de cuisson (11 ; 11') directement exposée au flux chauffant (20 ; 20'), ledit support de cuisson (10 ; 10') délimitant avec le moyen de réception (3 ; 3') une première zone de cuisson (12 ; 12') protégée partiellement du flux chauffant (20 ; 20') et une deuxième zone de cuisson (13 ; 13') davantage exposée au flux chauffant (20 ; 20') que la première zone de cuisson (12 ; 12').

2. Appareil de cuisson selon la revendication 1, **caractérisé en ce que** l'enceinte de cuisson (1 ; 1') est définie par un boîtier (5 ; 5') logeant le moyen de réception (3 ; 3'), le moyen de remuage (4 ; 4') et le support de cuisson (10 ; 10').

3. Appareil de cuisson selon l'une des revendications 1 ou 2, **caractérisé en ce que** le support de cuisson (10 ; 10') est amovible par rapport au moyen de réception (3 ; 3').

4. Appareil de cuisson selon la revendication 3, **caractérisé en ce que** le moyen de chauffe (2 ; 2') est conçu pour générer un flux chauffant (20 ; 20') atteignant le moyen de réception (3 ; 3') en l'absence du support de cuisson (10 ; 10') dans l'enceinte de cuisson (1 ; 1').

5. Appareil de cuisson selon l'une des revendications 1 à 4, **caractérisé en ce que** le moyen de chauffe (2 ; 2') est conçu pour générer un flux chauffant (20 ; 20') atteignant le moyen de réception (3 ; 3') en présence du support de cuisson (10 ; 10') dans l'enceinte de cuisson (1 ; 1').

6. Appareil de cuisson selon l'une des revendications 1 à 5, **caractérisé en ce que** le support de cuisson (10 ; 10') repose sur le moyen de remuage (4 ; 4').

7. Appareil de cuisson selon l'une des revendications 1 à 6, **caractérisé en ce que** le support de cuisson (10 ; 10') est entraîné en rotation.

8. Appareil de cuisson selon l'une des revendications 1 à 7, **caractérisé en ce que** le support de cuisson (10 ; 10') présente au moins une portion concave.

9. Appareil de cuisson selon l'une des revendications 1 à 8, **caractérisé en ce que** le moyen de réception (3 ; 3') forme une cuve (30).

10. Appareil de cuisson selon l'une des revendications 1 à 9, **caractérisé en ce que** le moyen de réception (3 ; 3') et le moyen de remuage (4 ; 4') sont conçus pour être animés d'un mouvement relatif de rotation.

11. Appareil de cuisson selon l'une des revendications 1 à 10, **caractérisé en ce que** le moyen de remuage (4 ; 4') est entraîné en rotation.

12. Appareil de cuisson selon l'une des revendications 1 à 11, **caractérisé en ce que** le flux chauffant (20 ; 20') comprend un flux d'air chaud et/ou un flux rayonnant.

13. Appareil de cuisson selon l'une des revendications 1 à 12, **caractérisé en ce que** la surface de cuisson (11) est interposée entre le flux chauffant (20) et le moyen de réception (3).

14. Appareil de cuisson selon l'une des revendications 1 à 13, **caractérisé en ce que** le moyen de chauffe (2') comporte un ventilateur (21') générant un flux aéraulique et un élément chauffant (23') agencé dans le flux aéraulique généré par le ventilateur (21'), le moyen de chauffe (2') générant un flux d'air chaud (20a) toroïdal propulsé par le ventilateur (21'), et **en ce que** le support de cuisson (10') est agencé au moins partiellement à l'intérieur du flux d'air chaud (20a) toroïdal.

15. Appareil de cuisson selon la revendication 14, **caractérisé en ce que** le support de cuisson (10') présente au moins une ouverture centrale (17) prévue pour le passage du flux d'air chaud (20a) toroïdal.

16. Appareil de cuisson selon l'une des revendications 1 à 15, **caractérisé en ce que** le support de cuisson (10) ménage un passage annulaire (15) avec le moyen de réception (3).

17. Appareil de cuisson selon l'une des revendications 1 à 16, **caractérisé en ce que** le moyen de remuage (4 ; 4') est agencé dans la première zone de cuisson (12) ou dans la deuxième zone de cuisson (13').

## Patentansprüche

1. Gargerät, insbesondere Trockenfritteuse, mit einem Garraum (1; 1'), einem Aufheizmittel (2; 2'), das zur Erzeugung eines Hitzestroms (20; 20') im Garraum (1; 1') ausgelegt ist, einem Aufnahmemittel (3; 3'), das zur Aufnahme von Nahrungsmitteln im Garraum (1; 1') vorgesehen ist, einem Rührmittel (4; 4'), das innerhalb des Aufnahmemittels (3; 3') angeordnet ist, wobei das Aufnahmemittel (3; 3') eine obere Öffnung (8; 8') aufweist, wobei der Hitzestrom (20; 20') durch die obere Öffnung (8; 8') in das Aufnahmemittel (3; 3') einströmt, **dadurch gekennzeichnet, dass** ein von dem Rührmittel (4; 4') getrennter Gargutträger (10; 10') im Garraum (1; 1') angeordnet ist und eine Garfläche (11; 11') bildet, die direkt dem Hitzestrom (20; 20') ausgesetzt ist, wobei der Gargutträger (10; 10') mit dem Aufnahmemittel (3; 3') eine erste Garzone (12; 12') abgrenzt, die teilweise vor dem Hitzestrom (20; 20') geschützt ist, und eine zweite Garzone (13; 13') abgrenzt, die dem Hitzestrom (20; 20') stärker ausgesetzt ist als die erste Garzone (12; 12').

2. Gargerät nach Anspruch 1, **dadurch gekennzeichnet, dass** der Garraum (1; 1') durch eine Gehäuse (5; 5') gebildet wird, in dem das Aufnahmemittel (3; 3'), das Rührmittel (4; 4') und der Gargutträger (10; 10') untergebracht sind.

3. Gargerät nach einem der Ansprüche 1 oder 2, **dadurch gekennzeichnet, dass** der Gargutträger (10; 10') in Bezug auf das Aufnahmemittel (3; 3') abnehmbar ist.

4. Gargerät nach Anspruch 3, **dadurch gekennzeichnet, dass** das Aufheizmittel (2; 2') so ausgelegt ist, dass es einen Hitzestrom (20; 20') erzeugt, der das Aufnahmemittel (3; 3') bei Abwesenheit des Gargutträgers (10; 10') im Garraum (1; 1') erreicht.

5. Gargerät nach einem der Ansprüche 1 bis 4, **dadurch gekennzeichnet, dass** das Aufheizmittel (2; 2') so ausgelegt ist, dass es einen Hitzestrom (20; 20') erzeugt, der das Aufnahmemittel (3; 3') bei Vorhandensein des Gargutträgers (10; 10') im Garraum (1; 1') erreicht.

6. Gargerät nach einem der Ansprüche 1 bis 5, **dadurch gekennzeichnet, dass** der Gargutträger (10; 10') auf dem Rührmittel (4; 4') aufliegt.

7. Gargerät nach einem der Ansprüche 1 bis 6, **dadurch gekennzeichnet, dass** der Gargutträger (10; 10') in Drehung versetzt wird.

8. Gargerät nach einem der Ansprüche 1 bis 7, **dadurch gekennzeichnet, dass** der Gargutträger (10; 10') mindestens einen konkaven Abschnitt aufweist.

9. Gargerät nach einem der Ansprüche 1 bis 8, **dadurch gekennzeichnet, dass** das Aufnahmemittel (3; 3') einen Behälter (30) bildet.

10. Gargerät nach einem der Ansprüche 1 bis 9, **dadurch gekennzeichnet, dass** das Aufnahmemittel (3; 3') und das Rührmittel (4; 4') so ausgelegt sind, dass sie in eine relative Drehbewegung versetzt werden können.

11. Gargerät nach einem der Ansprüche 1 bis 10, **dadurch gekennzeichnet, dass** die Rührmittel (4; 4') in Drehung versetzt wird.

12. Gargerät nach einem der Ansprüche 1 bis 11, **dadurch gekennzeichnet, dass** der Hitzestrom (20; 20') einen Heißluftstrom und/oder einen Strahlungsstrom umfasst.

13. Gargerät nach einem der Ansprüche 1 bis 12, **dadurch gekennzeichnet, dass** die Garfläche (11) zwischen dem Hitzestrom (20) und dem Aufnahmemittel (3) eingefügt ist.

14. Gargerät nach einem der Ansprüche 1 bis 13, **dadurch gekennzeichnet, dass** das Aufheizmittel (2') einen Ventilator (21'), der einen Luftstrom erzeugt, und ein Heizelement (23') umfasst, das in dem von dem Ventilator (21') erzeugten Luftstrom angeordnet ist, wobei das Aufheizmittel (2') einen toroidalen Heißluftstrom (20a) erzeugt, der von dem Ventilator (21') angetrieben wird, und dass der Gargutträger (10') zumindest teilweise innerhalb des toroidalen Heißluftstroms (20a) angeordnet ist.

15. Gargerät nach Anspruch 14, **dadurch gekennzeichnet, dass** der Gargutträger (10') mindestens eine zentrale Öffnung (17) aufweist, die für den Durchgang des toroidalen Heißluftstroms (20a) vorgesehen ist.

16. Gargerät nach einem der Ansprüche 1 bis 15, **dadurch gekennzeichnet, dass** der Gargutträger (10) einen ringförmigen Durchgang (15) mit dem Aufnahmemittel (3) bildet.

17. Gargerät nach einem der Ansprüche 1 bis 16, **dadurch gekennzeichnet, dass** das Rührmittel (4; 4') in der ersten Garzone (12) oder in der zweiten Garzone (13') angeordnet ist.

## Claims

1. Cooking appliance, in particular a dry-cooking fryer, including a cooking chamber (1; 1'), a heating means (2; 2') designed to generate a heating flow (20; 20') in the cooking chamber (1; 1'), a receiving means (3; 3') for receiving the foods in the cooking chamber (1; 1'), a stirring means (4; 4') arranged within the receiving means (3; 3'), the receiving means (3; 3') having an upper opening (8; 8'), the heating flow (20; 20') entering in the receiving means (3; 3') through the upper opening (8; 8'), **characterised in that** a cooking holder (10; 10') that is separate from the stirring means (4; 4') is arranged in the cooking chamber (1; 1') and forms a cooking surface (11; 11') that is directly exposed to the heating flow (20; 20'), said cooking holder (10; 10') defining, together with the receiving means (3; 3'), a first cooking area (12; 12') that is at least partially protected from the heating flow (20; 20') and a second cooking area (13; 13') that is more exposed to the heating flow (20; 20') than the first cooking area (12; 12').

2. Cooking appliance according to claim 1, **characterised in that** the cooking chamber (1; 1') is defined by a casing (5; 5') housing the receiving means (3; 3'), the stirring means (4; 4') and the cooking holder (10; 10').

3. Cooking appliance according to one of claims 1 or 2, **characterised in that** the cooking holder (10; 10') is removable with respect to the receiving means (3; 3').

4. Cooking appliance according to claim 3, **characterised in that** the heating means (2; 2') is designed to generate a heating flow (20; 20') reaching the receiving means (3; 3') in the absence of the cooking holder (10; 10') in the cooking chamber (1; 1').

5. Cooking appliance according to one of claims 1 to 4, **characterised in that** the heating means (2; 2') is designed to generate a heating flow (20; 20') reaching the receiving means (3; 3') in the presence of the cooking holder (10; 10') in the cooking chamber (1; 1').

6. Cooking appliance according to one of claims 1 to 5, **characterised in that** the cooking holder (10; 10') rests on the stirring means (4; 4').

7. Cooking appliance according to one of claims 1 to 6, **characterised in that** the cooking holder (10; 10') is rotated.

8. Cooking appliance according to one of claims 1 to 7, **characterised in that** the cooking holder (10; 10') has at least one concave portion.

9. Cooking appliance according to one of claims 1 to 8, **characterised in that** the receiving means (3; 3') forms a container (30).

10. Cooking appliance according to one of claims 1 to 9, **characterised in that** the receiving means (3; 3') and the stirring means (4; 4') are designed to be moved by a relative rotary movement.

11. Cooking appliance according to one of claims 1 to 10, **characterised in that** the stirring means (4; 4') is rotated.

12. Cooking appliance according to one of claims 1 to 11, **characterised in that** the heating flow (20; 20') includes a hot air flow and/or a radiating flow.

13. Cooking appliance according to one of claims 1 to 12, **characterised in that** the cooking surface (11) is interposed between the heating flow (20) and the receiving means (3).

14. Cooking appliance according to one of claims 1 to 13, **characterised in that** the heating means (2') has a ventilator (21') generating an aeraulic flow and a heating element (23') arranged in the aeraulic flow generated by the ventilator (21'), the heating means (2') generating a toroidal hot air flow (20a) propelled by the ventilator (21'), and **in that** the cooking holder (10') is arranged at least partially inside the toroidal hot air flow (20a).

15. Cooking appliance according to claim 14, **characterised in that** the cooking holder (10') has at least one central opening (17) provided for the passage of the toroidal hot air flow (20a).

16. Cooking appliance according to one of claims 1 to 15, **characterised in that** the cooking holder (10) houses an annular passage (15) with the receiving means (3).

17. Cooking appliance according to one of claims 1 to 16, **characterised in that** the stirring means (4;4') is arranged in the first cooking area (12) or in the second cooking area (13').
